# EUROPEAN PATENT SPECIFICATION

(11) **EP 4 542 685 B1**
(45) Date of publication and mention of the grant of the patent: **02.12.2026**
(21) Application number: 24207461.5
(22) Date of filing: 18.10.2024
(51) Int. Cl.: H01M 4/58, H01M 4/36

(54) **POSITIVE ELECTRODE MATERIAL, POSITIVE ELECTRODE SHEET, AND BATTERY**
POSITIVELEKTRODENMATERIAL, POSITIVELEKTRODENFOLIE UND BATTERIE
MATÉRIAU D'ÉLECTRODE POSITIVE, FEUILLE D'ÉLECTRODE POSITIVE ET BATTERIE

(30) Priority: 18.10.2023 CN 202311345732
(43) Date of publication of application: 23.04.2025
(73) Proprietor: Hithium Tech HK Limited, Hong Kong (HK)
(72) Inventor: JIAO, Tianpeng, Xiamen, Fujian, 361100 (CN); ZHENG, Jianming, Xiamen, Fujian, 361100 (CN); FANG, Chenxu, Xiamen, Fujian, 361100 (CN); HE, Wei, Xiamen, Fujian, 36110 (CN)
(74) Representative: Santarelli

(56) References cited:
- CN-A- 111 354 947
- CN-A- 113 451 548
- CN-A- 115 036 476
- CN-A- 115 285 960
- CN-A- 116 845 235
- LIU XINGZHONG ET AL: "Preparation and electrochemical properties of Co doped core-shell cathode material on a lithium iron phosphate surface", JOURNAL OF ALLOYS AND COMPOUNDS, ELSEVIER SEQUOIA, LAUSANNE, CH, vol. 923, 16 July 2022 (2022-07-16), XP087157050, ISSN: 0925-8388, [retrieved on 20220716], DOI: 10.1016/J.JALLCOM.2022.166326

## Description

### TECHNICAL FIELD

The disclosure relates to the field of battery technology, and specifically to a positive electrode material, a positive electrode sheet, and a battery.

### BACKGROUND

In the current field of power batteries and energy-storage batteries, a positive electrode material, i.e., lithium ion phosphate (LiFePO₄, LFP), is widely used in mobile power supplies, electric tools, electric bicycles, energy-storage apparatuses, etc. because of its advantages of high safety, low costs, and relatively good cycling performance. However, oxygen atoms in an LFP crystal are arranged in a manner approximate to hexagonal close packing, and thus lithium ion channels in the LFP are limited, so that a lithium-ion transmission capability of the LFP material is relatively poor, and utilization of a capacity and rate performance of the LFP is limited.
CN111354947A provides a manganese-doped composite cathode material and its preparation method. The preparation method of the composite cathode material of this invention includes the following steps: (1) dispersing lithium iron phosphate and manganese acetate in a dispersant, and then removing the dispersant and refining the material; (2) subjecting the refined material to annealing heat treatment to obtain a composite cathode material with a manganese-doped shell.
CN115036476A provides a multi-component phosphate cathode material, comprising lithium manganese iron phosphate composite particles and a carbon coating layer on the surface of the lithium manganese iron phosphate composite particles. The lithium manganese iron phosphate composite particles comprise a lithium manganese iron phosphate core and N layers of lithium manganese iron phosphate coating layers on the surface of the lithium manganese iron phosphate core. The manganese-iron molar ratio of lithium manganese iron phosphate in the lithium manganese iron phosphate core and each layer of lithium manganese iron phosphate coating layer increases radially from the inside to the outside. The particle size of the lithium manganese iron phosphate particles in the lithium manganese iron phosphate core and each layer of lithium manganese iron phosphate coating layer decreases radially from the inside to the outside.
In "Preparation and electrochemical properties of Co doped core-shell cathode material on a lithium iron phosphate surface", a core-shell structured lithium iron phosphate (LFP) with LFP as the core and LiCoₓ Fe₁₋ₓPO₄ as the shell was prepared using the solvothermal method. The doped Co broadened the diffusion channel of Li* in the [010] direction. Combined with the interface migration model, this core-shell structure was found to enhance the diffusion of Li⁺. The doped Co facilitated the formation of CoP, thereby improving the electronic conductivity of LFP. In addition, Co on the surface inhibited the corrosion of electrolytes during the cycle and protected the olivine structure of LFP. This core-shell structure cathode material possesses good interface stability and cycle stability during the cycle process. Electrochemical tests found the Co-doped core-shell structure to improve conductivity and exhibit excellent cycle performance and rate performance and it maintained 165.1mAh g⁻¹ 300 cycles at 0.1 C.
CN115285960A provides a gradient-doped iron phosphate precursor, its preparation method, and its application; its chemical structure is FeMgxP₁-ₓBₓO₄, and the concentration of the doping element increases gradient from the center to the outside, where 0<x≤0.2; LiFeMgₓP₁-ₓBₓO₄ is prepared using the doped precursor, where 0<x≤0.2; Mg and B elements are co-doped.

### SUMMARY

In view of this, a positive electrode material, a positive electrode sheet, and a battery are provided in the disclosure, where the battery has relatively high capacity utilization performance, energy efficiency, and rate performance when the positive electrode material is applied to the positive electrode sheet and the positive electrode sheet is assembled in the battery.

Aspects of the invention are set out in the appended claims.

In the positive electrode material provided in this embodiment, the shell includes the LFP and the doping element, and the doping element causes a lattice distortion in the LFP. On the one hand, the doping element is doped at an iron site, thereby expanding channels for transmission of ions in the LFP, and thus increasing a transmission speed of the ions in the LFP. On the other hand, the doping element is doped at the iron site, which is conducive to generating a vacancy, thereby increasing a transmission speed of electrons in the LFP. In short, in the shell, the doping of the doping element into the LFP improves ionic conductivity and electronic conductivity of the shell, accelerates dis-embedding of lithium ions from the positive electrode material, and improves the electrical conductivity and cycling performance of the positive electrode sheet when the positive electrode material is applied to the positive electrode sheet. Furthermore, the core does not include any doping element, so that a speed of dis-embedding lithium ions from the core is relatively slow, and a difference between the core and the shell in a lithium ion concentration and a difference between the core and the shell in a lattice change intensity of LFP cause the first particle to have a relatively large internal stress difference, and thus cracks are generated. In addition, the mass fraction of the transition metal element in the first particle gradually increases in the direction from the core towards the shell. In this case, in different regions of the shell, different degrees of doping the transition metal element into the LFP cause different degrees of distortions in LFP and different speeds of dis-embedding lithium ions from the positive electrode material, and different speeds of dis-embedding lithium ions from the positive electrode material cause different lithium ion concentrations in different regions of the shell, and thus lattice change intensities of LFP are different, so that the shell has a relatively large internal stress difference, thereby generating the cracks. Furthermore, when the doping element is doped into the LFP at the iron site, a metal-oxygen bond is preferentially broken, thereby accelerating formation of the cracks. When the positive electrode material is applied to the positive electrode sheet and the positive electrode sheet is assembled in the battery, active ions in the electrolyte may fully infiltrate the first particles through the cracks of the shell, so as to increase the migration speed of the active ions in the positive electrode sheet, make full use of capacities of active substances of the first particles, increase the capacity utilization rate of the positive electrode material, reduce the voltage polarization, fully utilize energy of the positive electrode material, and improve the capacity utilization performance, energy efficiency, and rate performance of the battery. Furthermore, the mass fraction of the transition metal element gradually increases in the direction from the core towards the shell, and thus a mass fraction of the transition metal element in the outermost periphery of the first particle is the largest. Moreover, the doping element causes a lattice distortion in the LFP, so that many vacancies and lithium ion channels are defined at the outermost periphery of the first particle, which is conducive to increasing the transmission rate of electrons and/or ions in the first particle, and improving the cycling performance of the positive electrode sheet to which the positive electrode material is applied.

### BRIEF DESCRIPTION OF THE DRAWINGS

In order to describe technical solutions in embodiments of the disclosure more clearly, the following will give a brief introduction to accompanying drawings required for describing embodiments. Apparently, the accompanying drawings hereinafter described illustrate some embodiments of the disclosure. Based on these drawings, those of ordinary skill in the art can also obtain other drawings without creative effort.
FIG. 1 is a schematic structural view of a battery in an embodiment of the disclosure.
FIG. 2 is a cross-sectional view of a positive electrode sheet in an embodiment of the disclosure.
FIG. 3 is a schematic cross-sectional structural view of a positive-electrode-material layer in an embodiment of the disclosure.
FIG. 4 is a schematic structural view of a first particle in an embodiment of the disclosure.
FIG. 5 is a schematic cross-sectional structural view of a positive-electrode-material layer in another embodiment of the disclosure.
FIG. 6 is a scanning electron microscope spectrum of a positive electrode material having low-level cracks.
FIG. 7 is a scanning electron microscope spectrum of a positive electrode material having medium-level cracks.
FIG. 8 is a scanning electron microscope spectrum of a positive electrode material having high-level cracks.

### Description of reference signs of the accompanying drawings:

100 - positive electrode material, 110 - first particle, 111 - core, 112 - shell, 113 - crack, 120 - second particle, 130 - third particle, 200 - positive electrode sheet, 210 - positive-current-collector layer, 220 - positive-electrode-material layer, 300 - battery, 310 - separator, 320 - negative electrode sheet, 330 - electrolyte.

### DETAILED DESCRIPTION

The following may illustrate clearly and completely technical solutions of embodiments of the disclosure with reference to accompanying drawings of embodiments of the disclosure. Apparently, embodiments illustrated herein are merely some, rather than all, of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or feature described in conjunction with the embodiment or implementation may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

In the current field of power batteries and energy-storage batteries, a positive electrode material, i.e., lithium ion phosphate (LiFePO₄, LFP), is widely used in mobile power supplies, electric tools, electric bicycles, energy-storage apparatuses, etc. because of its advantages of high safety, low costs, and relatively good cycling performance. However, oxygen atoms in an LFP crystal are arranged in a manner approximate to hexagonal close packing, and thus lithium ion channels in the LFP are limited, so that a lithium-ion transmission capability of the LFP material is relatively poor, and utilization of a capacity and rate performance of the LFP is limited.

Generally, in order to improve the lithium-ion transmission capability of the LFP material, LFP with a relatively small particle size is usually used as a positive electrode material. However, a positive electrode sheet that uses LFP with a relatively small particle size as a positive electrode material has a relatively low compaction density, and an energy density of a battery may be affected. In order to further improve the compaction density of the positive electrode sheet, LFP with a relatively small particle size is used with a positive electrode material, i.e., LFP with a large particle size. However, accordingly, a transmission path of a lithium ion in LFP with a large particle size becomes long, and thus the positive electrode sheet that uses a combination of LFP with a large particle size and LFP with a small particle size as a positive electrode material has a relatively large internal resistance, so that voltage polarization tends to be caused, and capacity utilization performance, energy efficiency, and rate performance of a battery may be reduced.

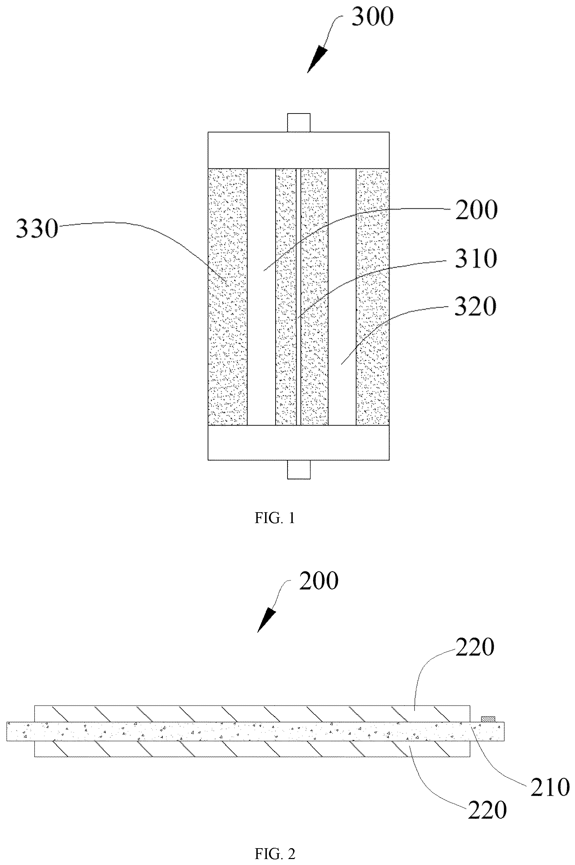

Referring to FIG. 1, a battery 300 is further provided in the disclosure. The battery 300 includes a positive electrode sheet 200 provided in the disclosure, a separator 310, a negative electrode sheet 320, and an electrolyte 330. The separator 310 is disposed at one side of the positive electrode sheet 200. The negative electrode sheet 320 is disposed at one side of the separator 310 away from the positive electrode sheet 200. At least part of the positive electrode sheet 200 and at least part of the negative electrode sheet 320 are infiltrated in the electrolyte 330.

It may be understood that the case that the separator 310 is disposed at one side of the positive electrode sheet 200 and the negative electrode sheet 320 is disposed at one side of the separator 310 away from the positive electrode sheet 200 may be that the negative electrode sheet 320, the separator 310, and the positive electrode sheet 200 are sequentially disposed.

In this embodiment, the negative electrode sheet 320, the separator 310, and the positive electrode sheet 200 are sequentially stacked first and then wound, and at least part of the negative electrode sheet 320 and at least part of the positive electrode sheet 200 are infiltrated in the electrolyte 330, so that the electrolyte 330 may react with a negative-electrode composite material in the negative electrode sheet 320, thereby improving a speed of delivering electrons and/or ions among the negative electrode sheet 320, the electrolyte 330, and the positive electrode sheet 200. Therefore, the negative electrode sheet 320 has a relatively high energy density as well as relatively good cycling performance and safety performance, and thus an energy density, cycling performance, and safety performance of the battery 300 may be improved. In embodiments of the disclosure, the positive electrode material 100 in the positive electrode sheet 200 has relatively good thermal stability, and thus the positive electrode sheet 200 has relatively good thermal stability when the battery 300 is in an overcharge state, so that the safety performance of the battery 300 is improved.

It may be understood that the battery 300 is a lithium ion battery.

Optionally, the battery 300 may be one of a cylindrical battery, a prismatic battery, a pouch battery, and the like.

It may be understood that in a lithium ion battery, the electrolyte 330 includes a lithium salt. The electrolyte 330 reacts with the positive electrode sheet 200 and the negative electrode sheet 320 to generate active ions, i.e., lithium ions. The lithium ions may be embedded into or dis-embedded from the positive electrode sheet 200 and the negative electrode sheet 320, respectively.

Referring to FIG. 2, a positive electrode sheet 200 is further provided in embodiments of the disclosure. The positive electrode sheet 200 includes a positive-current-collector layer 210 and a positive-electrode-material layer 220. The positive-electrode-material layer 220 is disposed on a surface of the positive-current-collector layer 210. The positive-electrode-material layer 220 includes the positive electrode material 100 provided in the disclosure.

It may be understood that the positive-electrode-material layer 220 may be disposed on the surface of the positive-current-collector layer 210 as follows. The positive-electrode-material layer 220 may be disposed on one surface of the positive-current-collector layer 210, or the positive-electrode-material layer 220 may be disposed on two opposite surfaces of the positive-current-collector layer 210.

In this embodiment, the positive-current-collector layer 210 may aggregate currents generated by the positive electrode material 100 in the positive-electrode-material layer 220 to generate a larger output current. The positive electrode material 100 has good thermal stability, so that the positive electrode sheet 200 has good thermal stability when the positive electrode material 100 is applied to the positive electrode sheet 200.

Optionally, the positive-electrode-material layer 220 further includes a binder and a conductive agent. In the positive-electrode-material layer 220, the binder is used for bonding the positive electrode material 100 and the conductive agent, thereby improving a bonding degree of each substance in the positive-electrode-material layer 220 and improving overall performance of the positive-electrode-material layer 220. In addition, the conductive agent makes the positive electrode sheet 200 have good charge and discharge performance, reducing a resistance for electrons to move in the positive electrode sheet 200, and increasing a movement rate of electrons in the positive-electrode-material layer 220.

Specifically, the conductive agent includes one or more of acetylene black, conductive carbon black, a carbon nanotube, a carbon fiber, graphene, and the like.

Specifically, the binder includes one or more of polyvinylidene fluoride (PVDF), styrene butadiene rubber (SBR), carboxymethyl cellulose (CMC), polymethyl methacrylate (PMMA), polyacrylic acid (PAA), and the like.

Optionally, in the positive-electrode-material layer 220, a mass content *w1* of the positive electrode material 100 satisfies: 95%≤*w1*≤98%. Specifically, a value of the mass content *w1* of the positive electrode material 100 may be, but is not limited to, 95%, 95.2%, 95.4%, 95.5%, 95.7%, 95.8%, 95.9%, 96%, 96.2%, 96.4%, 96.6%, 96.8%, 96.9%, 97%, 97.2%, 97.3%, 97.5%, 97.8%, 97.9%, 98%, and the like.

It may be understood that the value of the mass content *w1* of the positive electrode material 100 is a ratio of mass of the positive electrode material 100 in the positive-electrode-material layer 220 to mass of the positive-electrode-material layer 220.

In the positive electrode sheet 200 provided in this embodiment, when the mass content *w1* of the positive electrode material 100 in the positive-electrode-material layer 220 satisfies: 95%≤*w1*≤98%, the mass content of the positive electrode material 100 is in a reasonable range, so that the positive-electrode-material layer 220 has many active substances, and thus the positive electrode sheet 200 has a relatively high energy density and relatively good electrical conductivity. When the value of the mass content *w1* of the positive electrode material 100 is greater than 98%, the mass content of the positive electrode material 100 is too high, and correspondingly, a mass content of the conductive agent and a mass content of the binder are relatively low, so that the positive-electrode-material layer 220 has relatively poor electrical conductivity and bonding performance, and thus the overall performance of the positive electrode sheet 200 is reduced. When the value of the mass content *w1* of the positive electrode material 100 is less than 95%, the mass content of the positive electrode material 100 is too low, and the positive electrode material 100 has less active substances, and thus the energy density of the battery 300 is reduced when the positive electrode sheet 200 is applied to the battery 300.

Optionally, in the positive-electrode-material layer 220, a mass content w2 of the conductive agent satisfies: 0<*w2*≤3%. Specifically, a value of the mass content w2 of the conductive agent may be, but is not limited to, 0.2%, 0.4%, 0.6%, 0.8%, 0.9%, 1%, 1.1%, 1.3%, 1.4%, 1.5%, 1.6%, 1.8%, 1.9%, 2.0%, 2.1%, 2.2%, 2.4%, 2.6%, 2.7%, 2.8%, 2.9%, 3%, and the like.

In this embodiment, when the mass content w2 of the conductive agent satisfies: 0<*w2*≤3%, the mass content of the conductive agent in the positive-electrode-material layer 220 is in a reasonable range, so that with the aid of the conductive agent, the electrical conductivity of the positive-electrode-material layer 220 may be effectively improved, and the resistance for transmission of ions and/or electrons in the positive electrode material 100 may be reduced. Therefore, a capacity utilization rate of the positive electrode material 100 may be improved, and further a capacity utilization rate of the positive electrode sheet 200 may be improved.

Optionally, in the positive-electrode-material layer 220, a mass content w3 of the binder satisfies: 1%≤*w3*≤3%. Specifically, a value of the mass content w3 of the binder may be, but is not limited to, 1%, 1.1%, 1.3%, 1.4%, 1.5%, 1.6%, 1.8%, 1.9%, 2.0%, 2.1%, 2.2%, 2.4%, 2.6%, 2.7%, 2.8%, 2.9%, 3%, and the like.

In this embodiment, when the value of the mass content *w3* of the binder satisfies: 1%≤*w3*≤ 3%, the mass content w3 of the binder is in a reasonable range, so that the binder can sufficiently bond the positive electrode material 100 and the conductive agent, thereby improving a bonding degree of each substance in the positive-electrode-material layer 220 and improving the overall performance of the positive-electrode-material layer 220.

Optionally, a compaction density *p* of the positive electrode sheet 200 satisfies: 2.4 g/cm³ ≤ *ρ*≤ 2.7 g/cm³. Specifically, a value of the compaction density *p* of the positive electrode sheet 200 may be, but is not limited to, 2.4 g/cm³, 2.42 g/cm³, 2.43 g/cm³, 2.44 g/cm³, 2.45 g/cm³, 2.47 g/cm³, 2.48 g/cm³, 2.5 g/cm³, 2.51 g/cm³, 2.53 g/cm³, 2.55 g/cm³, 2.56 g/cm³, 2.58 g/cm³, 2.6 g/cm³, 2.62 g/cm³, 2.64 g/cm³, 2.66 g/cm³, 2.68 g/cm³, 2.7 g/cm³, etc.

In this embodiment, when the value of the compaction density *ρ* of the positive electrode sheet 200 satisfies: 2.4 g/cm³ ≤ *ρ*≤ 2.7 g/cm³, the compaction density of the positive electrode sheet 200 is in a reasonable range, so that the battery 300 has a relatively high energy density when the positive electrode sheet 200 is applied to the battery 300. When the value of the compaction density *ρ* of the positive electrode sheet 200 is greater than 2.7 g/cm³, the value of the compaction density of the positive electrode sheet 200 is too large, so that it is difficult for the electrolyte 330 to infiltrate the positive electrode sheet 200 when the positive electrode sheet 200 is applied to the battery 300, and thus a migration speed of active ions on the positive electrode sheet 200 is reduced, the capacity utilization rate of the positive electrode sheet 200 is reduced, and a capacity utilization rate of the battery 300 is reduced. When the value of the compaction density *ρ* of the positive electrode sheet 200 is less than 2.4 g/cm³, the value of the compaction density of the positive electrode sheet 200 is too small, so that the battery 300 has a relatively low energy density when the positive electrode sheet 200 is applied to the battery 300.

Optionally, a porosity *P* of the positive electrode sheet 200 satisfies: 20% ≤ *P* ≤ 45%. Specifically, a value of the porosity *P* of the positive electrode sheet 200 may be, but is not limited to, 20%, 21%, 23%, 24%, 25%, 27%, 29%, 30%, 31%, 32%, 33%, 34%, 35%, 36%, 37%, 38%, 39%, 40%, 41%, 42%, 43%, 44%, 45%, etc.

In this embodiment, when the porosity *P* of the positive electrode sheet 200 satisfies: 20% ≤ *P* ≤ 45%, the porosity of the positive electrode sheet 200 is in a reasonable range, so that the positive electrode sheet 200 can be fully infiltrated in the electrolyte 330, thereby improving the migration speed of the active ions on the positive electrode sheet 200, improving the capacity utilization rate of the positive electrode sheet 200, and improving the capacity utilization rate of the battery 300. When the value of the porosity P of the positive electrode sheet 200 is greater than 45%, the porosity of the positive electrode sheet 200 is too large, and the positive electrode sheet 200 has too many pores, so that the positive electrode sheet 200 has a relatively low compaction density, and thus the energy density of the battery 300 is reduced when the positive electrode sheet 200 is applied to the battery 300. When the value of the porosity P of the positive electrode sheet 200 is less than 20%, the porosity of the positive electrode sheet 200 is too small, so that it is difficult for the electrolyte 330 to infiltrate the positive electrode sheet 200, and thus the migration speed of active ions on the positive electrode sheet 200 is reduced, the capacity utilization rate of the positive electrode sheet 200 is reduced, and the capacity utilization rate of the battery 300 is reduced.

Optionally, a surface density S of the positive electrode sheet 200 satisfies: 300 g/m²≤ *S* ≤ 480 g/m². Specifically, a value of the surface density S of the positive electrode sheet 200 may be, but is not limited to, 300 g/m², 305 g/m², 315 g/m², 320 g/m², 330 g/m², 340 g/m², 350 g/m², 360 g/m², 370 g/m², 380 g/m², 390 g/m², 400 g/m², 410 g/m², 420 g/m², 430 g/m², 440 g/m², 450 g/m², 460 g/m², 470 g/m², and 480 g/m².

In this embodiment, when the surface density S of the positive electrode sheet 200 satisfies: 300 g/m²≤ *S* ≤ 480 g/m², the surface density of the positive electrode sheet 200 is in a reasonable range, so that a distribution density of the positive electrode material 100 in the positive electrode sheet 200 is in a reasonable range, which is conducive to improving the capacity utilization rate of the positive electrode sheet 200 and further improving the capacity utilization rate of the battery 300.

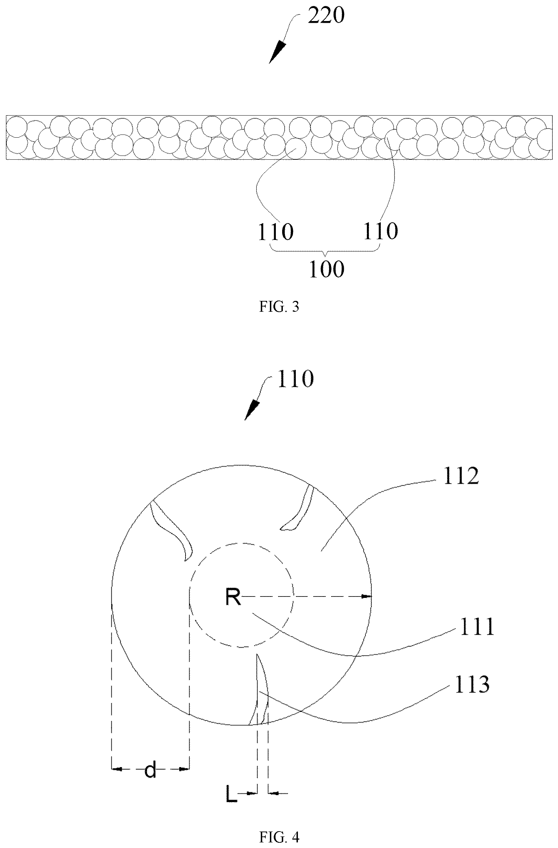

Referring to FIG. 3 and FIG. 4, a positive electrode material 100 is provided in the disclosure. The positive electrode material 100 includes multiple first particles 110. Each of the multiple first particles 110 includes a core 111 and a shell 112. The shell 112 is wrapped around a periphery of the core 111. The core 111 includes LFP. The shell 112 includes LFP and a doping element. The doping element is a transition metal element. In the shell 112, a mass fraction of the transition metal element gradually increases in a direction from the core 111 towards the shell 112.

It is understood that the case that the shell 112 is wrapped around the periphery of the core 111 and that the core 111 is disposed in the shell 112.

It is understood that the case that the shell 112 includes the LFP and the doping element and that the shell 112 is a doped region where the LFP is doped with a transition metal element.

It is understood that in the shell 112, the mass fraction of the transition metal element does gradually increase in the direction from the core 111 towards the shell 112 as follows. In the direction from the core 111 towards the shell 112, the mass fraction of the transition metal element is in gradient change and gradually increases. In the first particle 110, a mass fraction of the transition metal element in a portion of the shell 112 away from the core 111 is greater than a mass fraction of the transition metal element in a portion of the shell 112 close to the core 111.

It is understood that the shell 112 includes the LFP and the doping element. When the doping element is added to the LFP, the doping element causes a lattice distortion in the LFP. On the one hand, the doping element is doped at an iron site, thereby expanding channels for transmission of ions in the LFP, and thus increasing a transmission speed of the ions in the LFP. On the other hand, the doping element is doped at the iron site, which is conducive to generating a vacancy, thereby increasing a transmission speed of electrons in the LFP, and thus improving the electrical conductivity and cycling performance of the positive electrode sheet 200 when the positive electrode material 100 is applied to the positive electrode sheet 200.

In the positive electrode material 100 provided in this embodiment, the shell 112 includes the LFP and the doping element, and the doping element causes a lattice distortion in the LFP. On the one hand, the doping element is doped at an iron site, thereby expanding channels for transmission of ions in the LFP, and thus increasing a transmission speed of the ions in the LFP. On the other hand, the doping element is doped at the iron site, which is conducive to generating a vacancy, thereby increasing a transmission speed of electrons in the LFP. In short, in the shell 112, the doping of the doping element into the LFP improves ionic conductivity and electronic conductivity of the shell 112, accelerates dis-embedding of lithium ions from the positive electrode material 100, and improves the electrical conductivity and cycling performance of the positive electrode sheet 200 when the positive electrode material 100 is applied to the positive electrode sheet 200. Furthermore, the core 111 does not include any doping element, so that a speed of dis-embedding lithium ions from the core 111 is relatively slow, and a difference between the core 111 and the shell 112 in a lithium ion concentration and a difference between the core 111 and the shell 112 in a lattice change intensity of LFP cause the first particle 110 to have a relatively large internal stress difference, and thus cracks 113 are generated. In addition, the mass fraction of the transition metal element in the first particle 110 gradually increases in the direction from the core 111 towards the shell 112. In this case, in different regions of the shell 112, different degrees of doping the transition metal element into the LFP cause different degrees of distortions in LFP and different speeds of dis-embedding lithium ions from the positive electrode material 100, and different speeds of dis-embedding lithium ions from the positive electrode material 100 cause different lithium ion concentrations in different regions of the shell 112, and thus lattice change intensities of LFP are different, so that the shell 112 has a relatively large internal stress difference, thereby generating the cracks 113. Furthermore, when the doping element is doped into the LFP at the iron site, a metal-oxygen bond is preferentially broken, thereby accelerating formation of the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. Furthermore, the mass fraction of the transition metal element gradually increases in the direction from the core 111 towards the shell 112, and thus a mass fraction of the transition metal element in the outermost periphery of the first particle 110 is the largest. Moreover, the doping element causes a lattice distortion in the LFP, so that many vacancies and lithium ion channels are defined at the outermost periphery of the first particle 110, which is conducive to increasing the transmission rate of electrons and/or ions in the first particle 110, and improving the cycling performance of the positive electrode sheet 200 when the positive electrode material 100 is applied to the positive electrode sheet 200.

An equivalent spherical radius of the first particle 110 is *R,* a thickness of the shell 112 is *d,* and *d*/*R* satisfies: 0.3 ≤ *d*/*R* ≤ 0.8. Specifically, a value of *d*/*R* may be, but is not limited to, 0.3, 0.32, 0.35, 0.38, 0.4, 0.42, 0.45, 0.47, 0.48, 0.5, 0.52, 0.54, 0.56, 0.6, 0.62, 0.65, 0.68, 0.7, 0.72, 0.74, 0.76, 0.78, 0.79, and 0.8.

When the value of *d*/*R* satisfies: 0.3 ≤ *d*/*R* ≤ 0.8, a ratio of the thickness of the shell 112 to the equivalent spherical radius of the first particle 110 is in a reasonable range. In other words, the thickness of the shell 112 and the thickness of the core 111 are in a reasonable range. In this case, in the first particle 110, a depth of the doped region of the LFP doped with the doping element is in a reasonable range, so that there is a relatively large lattice difference between the LFP of the core 111 and the LFP of the shell 112. Moreover, the shell 112 is sufficiently thick, and a lattice difference exists between regions of the shell 112, so that the first particle 110 may generate a relatively large internal stress therein, and thus the cracks 113 are defined on the first particle 110. When the positive electrode material 100 is applied to the positive electrode sheet 200 and the positive electrode sheet 200 is assembled in the battery 300, the active ions in the electrolyte 330 infiltrate the first particles 110 through the cracks 113 of the shell 112, thereby accelerating the migration speed of the active ions in the positive electrode sheet 200, which is conducive to improving the capacity utilization rate of the positive electrode material 100 and ultimately improving the capacity utilization performance, energy efficiency, and rate performance of the battery 300. When the value of *d*/*R* is greater than 0.8 and the value of the equivalent spherical radius of the first particle 110 is in a reasonable range, the shell 112 is too thick. In other words, the depth of the core 111 is too small. In the first particle 110, the doped region of the LFP doped with the doping element is too large, so that an internal stress difference between the LFP of the core 111 and the LFP of the shell 112 is not large, and thus it is difficult to form the cracks 113 in the first particle 110. When the positive electrode material 100 is applied to the positive electrode sheet 200 and the positive electrode sheet 200 is assembled in the battery 300, it is difficult for the active ions in the electrolyte 330 to infiltrate the first particles 110 through the cracks 113 of the shell 112, which in turn reduces the migration speed of the active ions in the positive electrode sheet 200, reduces the capacity utilization rate of the positive electrode material 100, and also reduces the capacity utilization performance, energy efficiency, and rate performance of the battery 300. When the value of *d*/*R* is less than 0.3 and the value of the equivalent spherical radius of the first particle 110 is in a reasonable range, the shell 112 is too thin. In other words, the doped region of the LFP doped with the doping element in the first particle 110 is too small, so that a difference between the LFP of the core 111 and the LFP of the shell 112 in the lattice change intensity is not large, and a difference between lithium ion concentrations in different regions of the shell 112 is relatively small, and thus the internal stress of the first particle 110 is relatively small, and it is difficult to form the cracks 113 in the first particle 110. When the positive electrode material 100 is applied to the positive electrode sheet 200 and the positive electrode sheet 200 is assembled in the battery 300, it is difficult for the active ions in the electrolyte 330 to infiltrate the first particles 110 through the cracks 113 of the shell 112, which in turn reduces the migration speed of the active ions in the positive electrode sheet 200, reduces the capacity utilization rate of the positive electrode material 100, and also reduces the capacity utilization performance, energy efficiency, and rate performance of the battery 300.

In the embodiment in FIG. 4 of the disclosure, a shape of the first particle 110 is spherical, which may not be construed as a limitation to the shape of the first particle 110. Optionally, the shape of the first particle 110 may be ellipsoidal, anisotropic, and the like.

In some embodiments, a particle size *D1* of the first particle 110 satisfies: 1.5 µm ≤ *D1* ≤ 10 µm. Specifically, a value of the particle size *D1* of the first particle 110 may be, but is not limited to, 1.5 µm, 1.8 µm, 2 µm, 2.2 µm, 2.5 µm, 2.8 µm, 3 µm, 3.2 µm, 3.5 µm, 3.7 µm, 4 µm, 4.5 µm, 4.8 µm, 5 µm, 5.5 µm, 5.9 µm, 6.5 µm, 6.8 µm, 7 µm, 7.2 µm, 7.5 µm, 7.8 µm, 8 µm, 8.2 µm, 8.6 µm, 8.9 µm, 9.2 µm, 9.6 µm, 9.9 µm, 10 µm, etc.

In this embodiment, when the value of the particle size *D1* of the first particle 110 satisfies: 1.5 µm ≤ *D1* ≤ 10 µm, the particle size of the first particle 110 is in a reasonable range, which is conducive to improving the compaction density of the positive electrode sheet 200 and further improving the energy density of the battery 300 when the positive electrode material 100 is applied to the positive electrode sheet 200 and the positive electrode sheet 200 is assembled in the battery 300. In addition, the first particle 110 is a core-shell structure, the shell 112 includes LFP and a doping element, and the doping element causes lattice change in the LFP, so that the first particle 110 has a relatively large internal stress difference, and thus the cracks 113 are generated. When the positive electrode material 100 is applied to the positive electrode sheet 200 and the positive electrode sheet 200 is assembled in the battery 300, the active ions in the electrolyte 330 fully infiltrate the first particles 110 through the cracks 113 of the shell 112, so that the positive electrode sheet 200 has both a relatively high compaction density and a relatively high capacity utilization rate, thereby improving the energy density, capacity utilization performance, capacity efficiency, and rate performance of the battery 300.

In some embodiments, a chemical formula of the shell 112 is LiFe₁ₓMₓPO₄, where M represents a doping element. M is selected from a group consisting of vanadium (V), manganese (Mn), cobalt (Co), nickel (Ni), stannum (Sn), magnesium (Mg), tungsten (W), chromium (Cr), titanium (Ti), and combinations thereof, and x satisfies: 0<x<0.2. Specifically, a value of x may be, but is not limited to, 0.01, 0.03, 0.04, 0.05, 0.08, 0.09, 0.1, 0.12, 0.13, 0.14, 0.15, 0.16, 0.17, 0.18, 0.19, and 0.2.

In this embodiment, a type of the doping element is selected from a group consisting of V, Mn, Co, Ni, Sn, Mg, W, Cr, Ti, and combinations thereof for doping LFP. In the shell 112, when the doping element is added to the LFP, doping of the doping element at an iron site causes a lattice distortion to occur in the LFP, the transmission speed of electrons in the LFP is increased by vacancy generation, and ion channels are expanded by lattice change, so that the transmission speed of ions in the LFP is increased, and thus increasing the ionic conductivity. Furthermore, the ionic conductivity and electronic conductivity of the shell 112 is increased, and dis-embedding of lithium ions from the positive electrode material 100 is accelerated, which is conducive to improving the electrical conductivity and cycling performance of the positive electrode sheet 200 when the positive electrode material 100 is applied to the positive electrode sheet 200. In addition, if the value of x satisfies: 0 < x < 0.2, the amount of the doping element in the shell 112 is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300.

In the shell 112, a mass fraction w of the doping element satisfies: 0.05% ≤ w ≤ 0.5%. Specifically, a value of *w* may be, but is not limited to, 0.05%, 0.08%, 0.1%, 0.12%, 0.14%, 0.18%, 0.2%, 0.22%, 0.24%, 0.26%, 0.28%, 0.3%, 0.32%, 0.35%, 0.36%, 0.4%, 0.42%, 0.46%, 0.48%, and 0.5%.

It may be understood that the mass fraction w of the doping element may be a ratio of mass of the doping element in the shell 112 to mass of the shell 112, or may be a ratio of the mass of the doping element in the shell 112 to mass of all elements in the shell 112.

In the shell 112, when the value of the mass fraction w of the doping element satisfies: 0.05% ≤ *w* ≤ 0.5%, the mass fraction *w* of the doping element is in a reasonable range, and thus the mass content of the doping element in the shell 112 is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. In the shell 112, when the value of the mass fraction w of the doping element is greater than 0.5%, the mass fraction w of the doping element is too large, and thus mass of other elements in the shell 112 accounts for a relatively small amount. However, since the doping element is an inactive element and incapable of storing lithium ions, the amount of active substances in the shell 112 is decreased, which is unconducive to improving the capacity utilization rate of the positive electrode sheet 200 when the positive electrode material 100 is applied to the positive electrode sheet 200. When the value of the mass fraction w of the doping element is less than 0.05%, the mass fraction w of the doping element is too small, and thus the mass content of the doping element in the shell 112 is relatively low. Therefore, the degree of the lattice distortion in the LFP caused by the doping element is relatively low, and thus a lattice difference between the LFP of the core 111 and the LFP of the shell 112 is reduced. Furthermore, a difference between the core 111 and the shell 112 in a lithium ion concentration and a lattice change intensity is relatively small, and thus an internal stress difference between regions of various portions of the first particle 110 is relatively small, which is unconducive to generating the cracks 113. When the positive electrode material 100 is applied to the positive electrode sheet 200 and the positive electrode sheet 200 is assembled in the battery 300, it is difficult for the active ions in the electrolyte 330 to fully infiltrate the first particles 110 through the cracks 113 of the shell 112, and thus the migration speed of the active ions in the positive electrode sheet 200 is reduced, which is unconducive to capacity utilization of the positive electrode material 100.

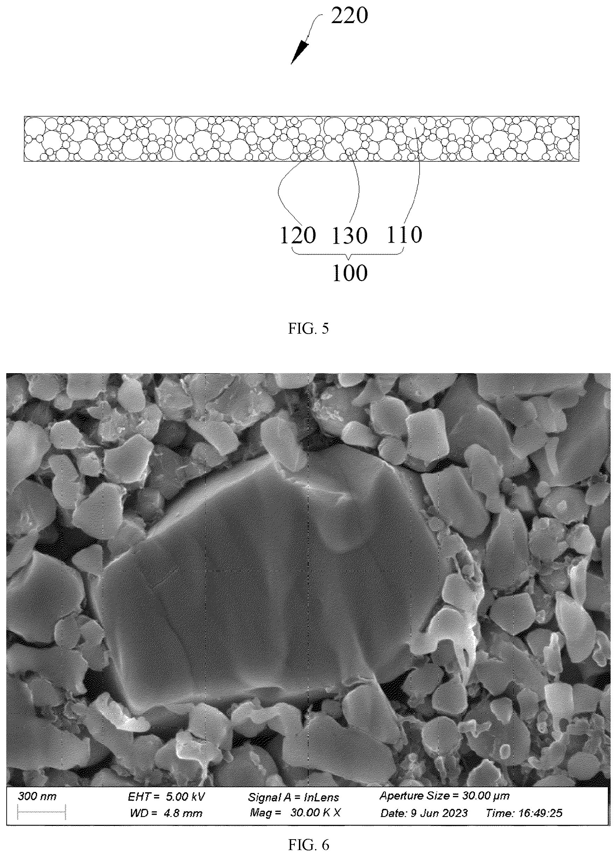

Referring to FIG. 5, in some embodiments, the positive electrode material 100 further includes multiple second particles 120 and multiple third particles 130. Both the multiple second particles 120 and the multiple third particles 130 are dispersed in the multiple first particles 110. A particle size of the first particle 110 is larger than a particle size of each of the multiple second particles 120, and a particle size of the second particle 120 is larger than a particle size of each of the multiple third particles 130.

It may be understood that in the positive electrode material 100, the first particle 110 is a large-sized particle, the second particle 120 is a medium-sized particle, and the third particle 130 is a small-sized particle.

In this embodiment, the positive electrode material 100 includes the multiple first particles 110, the multiple second particles 120, and the multiple third particles 130, and both the multiple second particles 120 and the multiple third particles 130 are dispersed in the multiple first particles 110. In other words, the first particles 110, the second particles 120, and the third particles 130 are mixed and distributed in the positive electrode material 100. In addition, the particle size of the first particle 110, the particle size of the second particle 120, and the particle size of the third particle 130 decrease in sequence. By dispersing the three types of particles with different particle sizes in the positive electrode material 100, both the second particles 120 and the third particles 130 with relatively small particle sizes are able to fully fill gaps between the multiple first particles 110, and the third particles 130 with even smaller particle sizes are able to fully fill gaps between the multiple second particles 120. With the aid of mutual cooperation of the first particles 110, the second particles 120, and the third particles 130, when the positive electrode material 100 is applied to the positive electrode sheet 200 and the positive electrode sheet 200 is assembled in the battery 300, the positive electrode sheet 200 has a relatively high compaction density, thereby improving the energy density of the battery 300. Furthermore, the shell 112 of the first particle 110 is doped with the doping element, so that the first particle 110 may have the cracks 113. In this case, the energy density of the positive electrode material 100 is improved and the electrolyte 330 may fully infiltrate the first particles 110, so that the battery 300 has excellent performance such as a high energy density, high capacity utilization performance, high energy efficiency, and high rate performance.

Optionally, the second particle 120 includes LFP, and the third particle 130 includes LFP.

In this embodiment, the second particle 120 and the third particle 130 include LFP, so that when the positive electrode material 100 includes the first particles 110, the second particles 120, and the third particles 130, the positive electrode material 100 has many active substances, which is conducive to improving the energy density of the positive electrode sheet 200 when the positive electrode material 100 is applied to positive electrode sheet 200.

In some embodiments, the particle size *D1* of the first particle 110 satisfies: 1.5 µm ≤ *D1* ≤ 10 µm, a particle size *D2* of the second particle 120 satisfies: 800 nm ≤ *D2* ≤ 1500 nm, and a particle size *D3* of the third particle 130 satisfies: 50 nm ≤ *D3* ≤ 800 nm.

In this embodiment, when the particle size *D1* of the first particle 110 satisfies: 1.5 µm ≤ *D1* ≤ 10 µm, the particle size *D1* of the first particle 110 is in a reasonable range, and the particle size of the first particle 110 is sufficiently large, which is conducive to improving the energy density of the battery 300 when the positive electrode material 100 is applied to the positive electrode sheet 200 and the positive electrode sheet 200 is assembled in the battery 300. When the particle size *D2* of the second particle 120 satisfies: 800 nm≤ *D2* ≤ 1500 nm, the particle size of the second particle 120 is in a reasonable range, so that in the positive electrode material 100, the second particles 120 may fill the gaps between the multiple first particles 110, thereby improving the compaction density of the positive electrode sheet 200 when the positive electrode material 100 is applied to the positive electrode sheet 200, and further improving the energy density of the battery 300 when the positive electrode sheet 200 is assembled in the battery 300. When the particle size *D3* of the third particle 130 satisfies: 50 nm ≤ *D3* ≤ 800 nm, the particle size of the third particle 130 is in a reasonable range, and the third particles 130 may fill the gaps between the multiple first particles 110 or fill the gaps between the multiple second particles 120, thereby improving the compaction density of the positive electrode sheet 200 when the positive electrode material 100 is applied to the positive electrode sheet 200, and further improving the energy density of the battery 300 when the positive electrode sheet 200 is assembled in the battery 300. In embodiments of the disclosure, by regulating a range of the particle size of the first particle 110, a range of the particle size of the second particle 120, and a range of the particle size of the third particle 130, multiple types of particles with different particle sizes may fill gaps between each other when the first particles 110, the second particles 120, and the third particles 130 are dispersed in the positive electrode material 100, thereby increasing the compaction density of the positive electrode sheet 200 when the positive electrode material 100 is applied to the positive electrode sheet 200, and further increasing the energy density of battery 300 when the positive electrode sheet 200 is assembled in the battery 300.

Specifically, the value of the particle size *D1* of the first particle 110 may be, but is not limited to, 1.5 µm, 1.8 µm, 2 µm, 2.2 µm, 2.5 µm, 2.8 µm, 3 µm, 3.2 µm, 3.5 µm, 3.7 µm, 4 µm, 4.5 µm, 4.8 µm, 5 µm, 5.5 µm, 5.9 µm, 6.5 µm, 6.8 µm, 7 µm, 7.2 µm, 7.5 µm, 7.8 µm, 8 µm, 8.2 µm, 8.6 µm, 8.9 µm, 9.2 µm, 9.6 µm, 9.9 µm, and 10 µm.

Specifically, a value of the particle size *D2* of the second particle 120 may be, but is not limited to, 800 nm, 850 nm, 888 nm, 900 nm, 925 nm, 950 nm, 1000 nm, 1050 nm, 1080 nm, 1099 nm, 1100 nm, 1120 nm, 1145 nm, 1160 nm, 1180 nm, 1200 nm, 1220 nm, 1250 nm, 1280 nm, 1300 nm, 1320 nm, 1350 nm, 1370 nm, 1380 nm, 1400 nm, 1420 nm, 1450 nm, 1480 nm, 1490 nm, and 1500 nm.

Specifically, a value of the particle size *D3* of the third particle 130 may be, but is not limited to, 50 nm, 80 nm, 100 nm, 120 nm, 150 nm, 180 nm, 200 nm, 220 nm, 250 nm, 280 nm, 300 nm, 350 nm, 380 nm, 400 nm, 450 nm, 480 nm, 500 nm, 520 nm, 580 nm, 600 nm, 620 nm, 650 nm, 700 nm, 750 nm, and 800 nm.

In some embodiments, in the positive electrode material 100, a number content *A1* of the first particles 110 satisfies: 1% ≤ *A1* ≤ 15%, a number content *A2* of the second particles 120 satisfies: 10% ≤ *A2* ≤ 30%, and a number content *A3* of the third particles 130 satisfies: 60% ≤ *A3* ≤ 85%.

It may be understood that the number content *A1* of the first particles 110 is a ratio of the number of the first particles 110 in the positive electrode material 100 to the total number of all particles in the positive electrode material 100. The number content *A2* of the second particles 120 is a ratio of the number of the second particles 120 in the positive electrode material 100 to the total number of all particles in the positive electrode material 100. The number content *A3* of the third particles 130 is a ratio of the number of the third particles 130 in the positive electrode material 100 to the total number of all particles in the positive electrode material 100.

In the positive electrode material 100 in this embodiment, when *A1* satisfies: 1% ≤ *A1* ≤ 15%, *A2* satisfies: 10% ≤ *A2* ≤ 30%, and *A3* satisfies: 60% ≤ *A3* ≤ 85%, the number of the first particles 110, the number of the second particles 120, and the number of the third particles 130 in the positive electrode material 100 are in a reasonable range, so that the first particles 110 can give full play to advantages of large-sized particles to increase the compaction density of the positive electrode material 100. Furthermore, the shell 112 of the first particle 110 is doped with the doping element, so that the first particle 110 has the cracks 113, which can enable the electrolyte 330 to fully infiltrate the first particles 110. The second particles 120 can give full play to advantages of medium-sized particles to fill the multiple gaps between the first particles 110, and transmission paths of ions in the electrolyte 330 in the second particles 120 are in a reasonable range, which is conducive to giving full play to the capacity of the positive electrode material 100. The third particles 130 can give full play to advantage of small-sized particles. On the one hand, the third particles 130 can fill pores between the multiple first particles 110 and/or pores between the multiple second particles 120, thereby further improving the compaction density of the positive electrode material 100. On the other hand, the particle size of the third particle 130 is relatively small, and transmission paths of ions in the electrolyte 330 in the third particles 130 are relatively short, which is conducive to improving the cycling performance and the rate performance of the battery 300 when the positive electrode material 100 is applied to the positive electrode sheet 200 and the positive electrode sheet 200 is assembled in the battery 300. In this embodiment, by reasonably regulating the number of the first particles 110, the number of the second particles 120, and the number of the third particles 130, the first particles 110, the second particles 120, and the third particles 130 all can give play to their respective advantages. Therefore, when the positive electrode material 100 is applied to positive electrode sheet 200 and the positive electrode sheet 200 is assembled in the battery 300, the positive electrode material 100 may have a relatively high capacity utilization rate, and the positive electrode sheet 200 may have a relatively high compaction density and capacity utilization rate, thereby ultimately improving the energy density, capacity utilization performance, energy efficiency, and rate performance of the battery 300.

Specifically, a value of the number content *A1* of the first particles 110 may be, but is not limited to, 1%, 1.5%, 2%, 2.5%, 3%, 4%, 5%, 5.5%, 6%, 7%, 8%, 9%, 10%, 11%, 12%, 13%, 13.5%, 14%, 14.5%, and 15%.

Specifically, a value of the number content *A2* of the second particles 120 may be, but is not limited to, 10%, 12%, 14%, 15%, 17%, 18%, 19%, 20%, 21%, 22%, 24%, 26%, 27%, 28%, 29%, and 30 %.

Specifically, a value of the number content *A3* of the third particles 130 may be, but is not limited to, 60%, 62%, 63%, 65%, 67%, 68%, 69%, 70%, 72%, 74%, 75%, 76%, 78%, 79%, 80%, 81%, 82%, 83%, 84%, and 85%.

In some embodiments, the shell 112 has multiple cracks 113, and the multiple cracks 113 are arranged at intervals or intersect with one other.

In this embodiment, the shell 112 has the multiple cracks 113 that are arranged at intervals or intersect with one other, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300.

In some embodiments, the number of the cracks 113 of the shell 112 ranges from 2 to 15. Specifically, the number of the cracks 113 of the shell 112 may be one of 2, 3, 4, 5, 6, 7, 8, 9, 10, 11, 12, 13, 14, and 15.

In this embodiment, when the number of the cracks 113 of the shell 112 ranges from 2 to 15, the number of the cracks 113 of the shell 112 is in a reasonable range, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. When the number of the cracks 113 of the shell 112 is greater than 15, an excessive number of cracks 113 of the shell 112 increases the probability that the core 111 is directly exposed to the electrolyte 330, thereby causing the LFP of the core 111 to react with the electrolyte 330, and thus accelerating consumption of the electrolyte 330 and decreasing the utilization rate of the electrolyte 330. On the other hand, in a region where the shell 112 defines the cracks 113, the electrical conductivity of the shell 112 is relatively poor, and an excessive number of cracks 113 of the shell 112 greatly reduces the electrical conductivity of the shell 112, so that an ability of the positive electrode sheet 200 to store lithium is reduced when the positive electrode material 100 is applied to the positive electrode sheet 200, and thus the capacity utilization rate of the positive electrode sheet 200 is reduced when the positive electrode material 100 is applied to the positive electrode sheet 200. When the number of the cracks 113 of the shell 112 is less than 2, the number of the cracks 113 of the shell 112 is too small, and the particle size of the first particle 110 is relatively large, so that it is difficult for the active ions in the electrolyte 330 to fully infiltrate the first particles 110 through the cracks 113 of the shell 112. Therefore, it is difficult to improve the migration rate of the active ions in the positive electrode sheet 200, and thus it is difficult to improve the capacity utilization rate of the positive electrode material 100, and it is difficult to give full play to the energy of the positive electrode material 100, thereby reducing the capacity utilization performance, energy efficiency, and rate performance of the battery 300.

In some embodiments, a maximum width *L* of the multiple cracks 113 satisfies: *L*≤ 15 nm. Specifically, a value of the maximum width *L* of the crack 113 may be, but is not limited to, 3 nm, 4 nm, 4.5 nm, 5 nm, 6 nm, 7 nm, 8 nm, 8.5 nm, 9 nm, 10 nm, 10.5 nm, 11 nm, 11.5 nm, 12 nm, 12.5 nm, 13 nm, 13.5 nm, 14 nm, 14.5 nm, and 15 nm.

In this embodiment, when the value of the maximum width *L* of the crack 113 satisfies: *L* ≤ 15 nm, the value of the maximum width *L* of the crack 113 is in a reasonable range, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. When the value of the maximum width *L* of the crack 113 is greater than 15 mm, the maximum width of the crack 113 is too large. On the one hand, the maximum width of the crack 113 of the shell 112 is too large, thereby increasing the probability that the core 111 is directly exposed to the electrolyte 330, and causing the LFP of the core 111 to react with the electrolyte 330, and thus accelerating consumption of the electrolyte 330 and decreasing the utilization rate of the electrolyte 330. On the other hand, in a region where the shell 112 defines the cracks 113, iron elements in LFP are easy to leach out from the cracks 113 when the maximum width of the crack 113 is too large, thereby destroying a crystalline structure of the LFP, and thus reducing an ability of the positive electrode sheet 200 to store lithium when the positive electrode material 100 is applied to the positive electrode sheet 200. Furthermore, in the region where the shell 112 defines the cracks 113, the electrical conductivity of the shell 112 is relatively poor, the electrical conductivity of the shell 112 is greatly reduced when the maximum width of the crack 113 is too large, and the ability of the positive electrode sheet 200 to store lithium is reduced when the positive electrode material 100 is applied to the positive electrode sheet 200, and thus the capacity utilization rate of the positive electrode sheet 200 is reduced when the positive electrode material 100 is applied to the positive electrode sheet 200.

In some embodiments, when a particle size *D50* of the positive electrode material 100 satisfies: 800 nm≤ *D50* ≤ 3000 nm, the number of the cracks 113 ranges from 2 to 6. When the particle size *D50* of the positive electrode material 100 satisfies: 3 µm ≤ *D50* ≤ 5 µm, the number of the cracks 113 ranges from 3 to 8. When the particle size *D50* of the positive electrode material 100 satisfies: 5 µm ≤ *D50* ≤ 10 µm, the number of the cracks 113 ranges from 6 to 12.

It may be understood that a value of the particle size *D50* of the positive electrode material 100 may be a value of a particle size a volume percentage of particles with which is 50% in the positive electrode material 100.

In this embodiment, the number of the cracks 113 changes when the value of the particle size *D50* of the positive electrode material 100 belongs to different ranges, and the number of the cracks 113 of the shell 112 tends to increase as the value of the particle size *D50* of the positive electrode material 100 continuously increases. When the value of the particle size *D50* of the positive electrode material 100 increases, the particle size of the first particle 110 in the positive electrode material 100 increases, and the number of the cracks 113 increases, so that when the positive electrode material 100 is applied to the positive electrode sheet 200 and the positive electrode sheet 200 is assembled in the battery 300, active ions in the electrolyte 330 may fully infiltrate the first particles 110 through the multiple cracks 113, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. When the value of the particle size *D50* of the positive electrode material 100 is too small, it is difficult to generate the cracks 113, or the width of the crack 13 or the number of the cracks 113 is too small. In this case, when the positive electrode material 100 is applied to the positive electrode sheet 200 and the positive electrode sheet 200 is assembled in the battery 300, it is difficult for the active ions in the electrolyte 330 to fully infiltrate the first particles 110 through the multiple cracks 113, and thus it is difficult to improve the migration rate of the active ions in the positive electrode sheet 200. Therefore, the capacity utilization rate of the active substances of the first particles 110 is reduced, the capacity utilization rate of the positive electrode material 100 is reduced, and thus the capacity utilization performance, energy efficiency, and rate performance of the battery 300 is reduced.

A positive electrode material 100 is further provided in another embodiment of the disclosure. The positive electrode material 100 includes multiple first particles 110. Each of the multiple first particles 110 includes a core 111 and a shell 112. The shell 112 is wrapped around a periphery of the core 111. The core 111 includes LFP. The shell 112 includes LFP and a doping element. The doping element is a transition metal element. The shell 112 has multiple cracks 113, and the multiple cracks 113 are arranged at intervals or intersect with one other.

It may be understood that the case that the shell 112 is wrapped around the periphery of the core 111 may be that the core 111 is disposed in the shell 112.

It may be understood that the case that the shell 112 includes the LFP and the doping element may be that the shell 112 is a doped region where the LFP is doped with a transition metal element.

It may be understood that the shell 112 includes the LFP and the doping element. When the doping element is added to the LFP, the doping element causes a lattice distortion in the LFP. On the one hand, the doping element is doped at an iron site, thereby expanding channels for transmission of ions in the LFP, and thus increasing a transmission speed of the ions in the LFP. On the other hand, the doping element is doped at the iron site, which is conducive to generating a vacancy, thereby increasing a transmission speed of electrons in the LFP, and thus improving the electrical conductivity and cycling performance of the positive electrode sheet 200 when the positive electrode material 100 is applied to the positive electrode sheet 200.

In the positive electrode material 100 provided in this embodiment, the shell 112 includes the LFP and the doping element, and the doping element causes a lattice distortion in the LFP. On the one hand, the doping element is doped at an iron site, thereby expanding channels for transmission of ions in the LFP, and thus increasing a transmission speed of the ions in the LFP. On the other hand, the doping element is doped at the iron site, which is conducive to generating a vacancy, thereby increasing a transmission speed of electrons in the LFP. In short, in the shell 112, the doping of the doping element into the LFP improves ionic conductivity and electronic conductivity of the shell 112, accelerates dis-embedding of lithium ions from the positive electrode material 100, and improves the electrical conductivity and cycling performance of the positive electrode sheet 200 when the positive electrode material 100 is applied to the positive electrode sheet 200. Furthermore, the core 111 does not include any doping element, so that a speed of dis-embedding lithium ions from the core 111 is relatively slow, and a difference between the core 111 and the shell 112 in a lithium ion concentration and a difference between the core 111 and the shell 112 in a lattice change intensity of LFP cause the first particle 110 to have a relatively large internal stress difference, and thus cracks 113 are generated. Furthermore, when the doping element is doped into the LFP at the iron site, a metal-oxygen bond is preferentially broken, thereby accelerating formation of the cracks 113. The shell 112 has the multiple cracks 113 that are arranged at intervals or intersect with one other, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300.

In some embodiments, the number of the cracks 113 of the shell 112 ranges from 2 to 15. Specifically, the number of the cracks 113 of the shell 112 may be one of 2, 3, 4, 5, 6, 7, 8, 9, 10, 11, 12, 13, 14, and 15.

In this embodiment, the positive electrode material 100 includes the first particles 110, and when the number of the cracks 113 of the shell 112 ranges from 2 to 15, the number of the cracks 113 of the shell 112 is in a reasonable range, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. When the number of the cracks 113 of the shell 112 is greater than 15, an excessive number of cracks 113 of the shell 112 increases the probability that the core 111 is directly exposed to the electrolyte 330, thereby causing the LFP of the core 111 to react with the electrolyte 330, and thus accelerating the consumption of the electrolyte 330 and decreasing the utilization rate of the electrolyte 330. On the other hand, in a region where the shell 112 defines the cracks 113, the electrical conductivity of the shell 112 is relatively poor, and an excessive number of cracks 113 of the shell 112 greatly reduces the electrical conductivity of the shell 112, so that an ability of the positive electrode sheet 200 to store lithium is reduced when the positive electrode material 100 is applied to the positive electrode sheet 200, and thus the capacity utilization rate of the positive electrode sheet 200 is reduced when the positive electrode material 100 is applied to the positive electrode sheet 200. When the number of the cracks 113 of the shell 112 is less than 2, the number of the cracks 113 of the shell 112 is too small, and the particle size of the first particle 110 is relatively large, so that it is difficult for the active ions in the electrolyte 330 to fully infiltrate the first particles 110 through the cracks 113 of the shell 112. Therefore, it is difficult to improve the migration rate of the active ions in the positive electrode sheet 200, it is difficult to improve the capacity utilization rate of the positive electrode material 100, and thus it is difficult to give full play to the energy of the positive electrode material 100, thereby reducing the capacity utilization performance, energy efficiency, and rate performance of the battery 300.

In other embodiments, a maximum width *L* of the multiple cracks 113 satisfies: *L*≤15 nm.

In this embodiment, when the value of the maximum width *L* of the crack 113 satisfies: *L* ≤ 15 nm, the value of the maximum width *L* of the crack 113 is in a reasonable range, so that when the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. When the value of the maximum width *L* of the crack 113 is greater than 15 mm, the maximum width of the crack 113 is too large. On the one hand, the maximum width of the crack 113 of the shell 112 is too large, thereby increasing the probability that the core 111 is directly exposed to the electrolyte 330, and causing the LFP of the core 111 to react with the electrolyte 330, and thus accelerating the consumption of the electrolyte 330 and decreasing the utilization rate of the electrolyte 330. On the other hand, in a region where the shell 112 defines the cracks 113, the doping element is doped at the iron site, and iron elements in LFP are easy to leach out from the cracks 113 when the maximum width of the crack 113 is too large, thereby changing a crystalline structure of the LFP, and thus reducing an ability of the positive electrode sheet 200 to store lithium when the positive electrode material 100 is applied to the positive electrode sheet 200. Furthermore, in the region where the shell 112 defines the cracks 113, the electrical conductivity of the shell 112 is relatively poor, the electrical conductivity of the shell 112 is greatly reduced when the maximum width of the crack 113 is too large, and the ability of the positive electrode sheet 200 to store lithium is reduced when the positive electrode material 100 is applied to the positive electrode sheet 200, and thus the capacity utilization rate of the positive electrode sheet 200 is reduced when the positive electrode material 100 is applied to the positive electrode sheet 200.

In some embodiments, the mass fraction of the transition metal element in the shell 112 may gradually increase in the direction from the core 111 towards the shell 112, and a mass fraction *w* of the doping element in the shell 112 satisfies: 0.05% ≤ *w* ≤ 0.5%. Specifically, a value of *w* may be, but is not limited to, 0.05%, 0.08%, 0.1%, 0.12%, 0.14%, 0.18%, 0.2%, 0.22%, 0.24%, 0.26%, 0.28%, 0.3%, 0.32%, 0.35%, 0.36%, 0.4%, 0.42%, 0.46%, 0.48%, and 0.5%.

It may be understood that the mass fraction *w* of the doping element may be a ratio of mass of the doping element in the shell 112 to mass of the shell 112, or may be a ratio of the mass of the doping element in the shell 112 to mass of all elements in the shell 112.

In this embodiment, in the direction from the core 111 towards the shell 112, the mass fraction of the transition metal element gradually increases. In this case, in different regions of the shell 112, different degrees of doping the transition metal element into the LFP cause different degrees of distortions in LFP and different speeds of dis-embedding lithium ions from the positive electrode material 100, and different speeds of dis-embedding lithium ions from the positive electrode material 100 cause different lithium ion in different regions of the shell 112, and thus lattice change intensities of LFP are different, so that the shell 112 has a relatively large internal stress difference, thereby generating the cracks 113. In addition, in the shell 112, when the value of the mass fraction *w* of the doping element satisfies: 0.05% ≤ *w* ≤ 0.5%, the mass fraction *w* of the doping element is in a reasonable range, and thus the mass content of the doping element in the shell 112 is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300.

The technical solutions of the disclosure are further described below in multiple embodiments.

Embodiments 1 to 16 and comparative embodiments 1 to 4 are as follows.

### 1. Preparation of the positive electrode sheet 200

### (1) Preparation of the positive electrode material 100

In embodiments 1 to 13 and comparative embodiments 1 to 3: the positive electrode material 100 is provided. The positive electrode material 100 includes first particles 110. Each of the first particle 110 includes a core 111 and a shell 112. The core 111 includes LFP. The shell 112 includes LFP and a doping element. In embodiments 1 to 13 and comparative embodiments 1 to 3, a value of a particle size *D50* of the positive electrode material 100, a type of the doping element, and a value of a mass fraction w of the doping element are illustrated in Table 1.

In embodiments 14 to 16 and comparative embodiment 4: the positive electrode material 100 is provided. The positive electrode material 100 includes first particles 110, second particles 120, and third particles 130. A value of a particle size *D1* of each of the first particles 110 satisfies: 1.5 µm ≤ *D1* ≤ 10 µm, and a number content *A1* of the first particles 110 is 6.8%. A value of a particle size *D2* of each of the second particles 120 satisfies: 800 nm ≤ *D2 ≤* 1500 nm, and a number content *A2* of the second particles 120 is 13.7%. A value of a particle size *D3* of each of the third particles 130 satisfies: 50 nm ≤ *D3* ≤ 800 nm, and a number content *A3* of the third particles 130 is 79.5%. The first particle 110 includes a core 111 and a shell 112. The core 111 includes LFP. The shell 112 includes LFP and a doping element. In embodiments 14 to 16 and comparative embodiment 4, a value of a particle size *D50* of the positive electrode material 100, a type of the doping element of the first particle 110, and a value of a mass fraction w of the doping element are illustrated in Table 2.

(2) Preparation of the positive electrode sheet 200: the positive electrode material 100 prepared in operation (1), a conductive agent (e.g., conductive carbon black), and a binder are dispersed in deionized water and mixed uniformly to obtain a positive electrode slurry. The positive electrode slurry is coated on a positive-current-collector layer 210 to form the positive-electrode-material layer 220. The positive-electrode-material layer 220 is subject to drying, cold pressing, slitting, and cutting to obtain the positive electrode sheet 200. In the positive-electrode-material layer 220, a mass content *w1* of the positive electrode material 100 is 97%, a mass content w2 of the conductive agent is 0.5%, and a mass content w3 of the binder is 2.5%. A compaction density *p* of each of positive electrode sheets 200 in embodiments 1 to 15 and comparative embodiments 1 to 3 is 2.45 g/cm³, and a value of the compaction density *p* of each of positive electrode sheets 200 in embodiments 14 to 16 and comparative embodiment 4 is described in Table 2.

2. Preparation of a negative electrode sheet 320 and a separator 310: graphite is used as the negative electrode sheet 320, and a polypropylene (PP) separator 310 having a thickness of 16 µm is selected.

3. Preparation of the electrolyte 330: ethylene carbonate (EC), ethyl methyl carbonate (EMC), and diethyl carbonate (DEC) are mixed according to a volume ratio of 1:1:1 to obtain a mixed solvent, and then dry lithium salt, e.g., lithium hexafluorophosphate (LiPF₆), is added to the mixed solvent to form the electrolyte 330 with a concentration of 1 mol/L.

4. Preparation of the battery 300: the positive electrode sheets 200, the separator 310, and the negative electrode sheet 320, that are prepared in embodiments 1 to 16 and comparative embodiments 1 to 4, are stacked in sequence, so that the separator 310 is located between the positive electrode sheet 200 and the negative electrode sheet 320. The positive electrode sheet 200, the separator 310, and the negative electrode sheet 320 as a whole are wound to obtain a bare cell. The bare cell is placed in an outer package. After drying, the electrolyte 330 described above is injected. After standing, forming, packaging, and other processes, the batteries 300 in embodiments 1 to 16 and comparative embodiments 1 to 4 are obtained. The battery 300 obtained is a pouch battery, a rated capacity of the battery 300 is 3 ampere-hours. The battery 300 in embodiment 1 selects the positive electrode sheet 200 in embodiment 1, the battery 300 in embodiment 2 uses the positive electrode sheet 200 in embodiment 2, the battery 300 in comparative embodiment 1 uses the positive electrode sheet 200 in comparative embodiment 1, the battery 300 in comparative embodiment 2 uses the positive electrode sheet 200 in comparative embodiment 2, and so on.

Table 1 below illustrates structural parameters of the positive electrode materials 100 in embodiments 1 to 13 and comparative embodiments 1 to 3, and Table 2 below illustrates structural parameters of the positive electrode materials 100 and structural parameters of the positive electrode sheets 200 in embodiments 14 to 16 and comparative embodiment 4.

**Table 1 structural parameters of positive electrode materials 100 in embodiments 1 to 13 and comparative embodiments 1 to 3**

| Embodiment and comparative embodiment | Particle size *D50* of positive electrode material (µm) | Type of doping element | Mass fraction *w* of doping element |
|---|---|---|---|
| Embodiment 1 | 1.4 | V | 0.20% |
| Embodiment 2 | 1.4 | V | 0.05% |
| Embodiment 3 | 1.4 | V | 0.10% |
| Embodiment 4 | 1.4 | V | 0.5% |
| Embodiment 5 | 1.4 | Mn | 0.10% |
| Embodiment 6 | 1.4 | Mn | 0.20% |
| Embodiment 7 | 1.4 | Mn | 0.4% |
| Embodiment 8 | 1.4 | W | 0.10% |
| Embodiment 9 | 1.4 | W | 0.20% |
| Embodiment 10 | 1.4 | W | 0.40% |
| Embodiment 11 | 1.9 | V | 0.20% |
| Embodiment 12 | 2.6 | V | 0.10% |
| Embodiment 13 | 2.6 | V | 0.20% |
| comparative embodiment 1 | 1.4 | / | / |
| comparative embodiment 2 | 1.4 | V | 0.003% |
| comparative embodiment 3 | 1.4 | V | 0.6% |

In the positive electrode material 100 in comparative embodiment 1, no doping element is doped into LFP.

**Table 2 structural parameters of positive electrode materials 100 and structural parameters of positive electrode sheets 200 in embodiments 14 to 16 and comparative embodiment 4**

| Embodiment and comparative embodiment | Particle size *D50* of positive electrode material (µm) | Type of doping element | Mass fraction *w* of doping element | compaction density *ρ* of positive electrode sheet (g/cm³) |
|---|---|---|---|---|
| Embodiment 14 | 1.4 | V | 0.2% | 2.5 |
| Embodiment 15 | 1.4 | V | 0.2% | 2.6 |
| Embodiment 16 | 1.4 | V | 0.2% | 2.7 |
| Comparative embodiment 4 | 1.4 | / | / | 2.5 |

In the first particles of the positive electrode material 100 in comparative embodiment 4, no doping element is doped into LFP.

### Performance test of the battery 300

1. Electrical performance test: the batteries 300 obtained in foregoing embodiments 1 to 16 and comparative embodiments 1 to 4 are subject to a constant-current charge-and-discharge cycle test on a charge-and-discharge meter, where a test temperature is 25°C, a charge rate and a discharge rate are respectively 0.1C and 2C (a magnitude of a charge/discharge current is usually represented by a charge/discharge rate, a calculation formula of the charge/discharge current is: charge/discharge current = charge/discharge rate × rated capacity of battery 300), a charge-and-discharge voltage window is from 2.5 V to 3.65 V (i.e., a charge cut-off voltage of the battery 300 is 3.65 V, and a discharge cut-off voltage of the battery 300 is 2.5 V), and generally a complete charge-and-discharge process is referred to as a charge-and-discharge cycle. That is, the battery 300 is charged to 3.65 V and stood, and then discharged from 3.65 V to 2.5 V, so that a charge-and-discharge cycle is formed. 2000 times of cycling is performed, that is, the complete charge-and-discharge process is repeated 2000 times.
   A capacity retention rate in the 2000th time of cycling = a discharge capacity in the 2000th time of cycling/a discharge capacity in the first time of cycling × 100%, energy efficiency in the 2000th time of cycling = discharge energy in the 2000th time of cycling/charge energy in the 2000th time of cycling × 100%, and a capacity retention rate at 2C = a discharge capacity tested at a rate of 2C/a discharge capacity tested at a rate of 0.1C. For each of the batteries 300 in embodiments 1 to 16 and comparative embodiments 1 to 4, a capacity at 0.1C, a capacity retention rate at 2C, a capacity retention rate in the 2000th time of cycling, and energy efficiency in the 2000th time of cycling are illustrated in Table 3.
2. Evaluation of the cracks 113 and performance testing: at a temperature of 25°C and at a current density of 1C, the batteries 300 obtained in foregoing embodiments 1 to 16 and comparative embodiments 1 to 4 are subject to a constant-current charge-and-discharge cycle for 2000 times of cycling on a charge-and-discharge meter, and a charge-and-discharge voltage window is from 2.5 V to 3.65 V. The cracks 113 of the positive electrode material 100 are evaluated with a scanning electron microscope. After the batteries 300 in foregoing embodiments 1 to 16 and comparative embodiments 1 to 4 are subject to 2000 times of cycling, levels of the cracks 113 are illustrated in Table 3.

Evaluation criteria for the cracks 113 of the positive electrode material 100 are as follows.
(1) When the particle size *D50* of the positive electrode material 100 satisfies: 800 nm ≤ *D50* ≤ 3000 nm, the number of the cracks 113 of each first particle ranges from 2 to 6, and the maximum width *L* of the cracks 113 satisfies: *L* ≤ 10 nm, so that the cracks 113 are defined as medium-level cracks. If the number of the cracks 113 of each first particle is greater than 6 and the value of the maximum width *L* of the crack 113 is greater than 10 nm, the cracks 113 are defined as high-level cracks. If the number of the crack(s) 113 of each first particle is less than 2, the crack 113 is defined as a low-level crack.
(2) When the particle size *D50* of the positive electrode material 100 satisfies: 3 µm ≤ *D50* ≤ *5* µm, the number of the cracks 113 of each first particle ranges from 3 to 8, and the maximum width *L* of the crack 113 satisfies: *L* ≤ 10 nm, so that the cracks 113 are defined as medium-level cracks. If the number of the cracks 113 of each first particle is greater than 8 and the value of the maximum width *L* of the crack 113 is greater than 10 nm, the cracks 113 are defined as high-level cracks. If the number of the cracks 113 of each first particle is less than 3, the cracks 113 are defined as low-level cracks.
(3) When the particle size *D50* of the positive electrode material 100 satisfies: 5 µm ≤ *D50* ≤ 10 µm, the number of the cracks 113 of each first particle ranges from 6 to 12, and the maximum width *L* of the crack 113 satisfies: *L* ≤ 15 nm, so that the cracks 113 are defined as medium-level cracks. If the number of the cracks 113 of each first particle is greater than 12 and the value of the maximum width *L* of the crack 113 is greater than 15 nm, the cracks 113 are defined as high-level cracks. If the number of the cracks 113 of each first particle is less than 6, the cracks 113 are defined as low-level cracks.

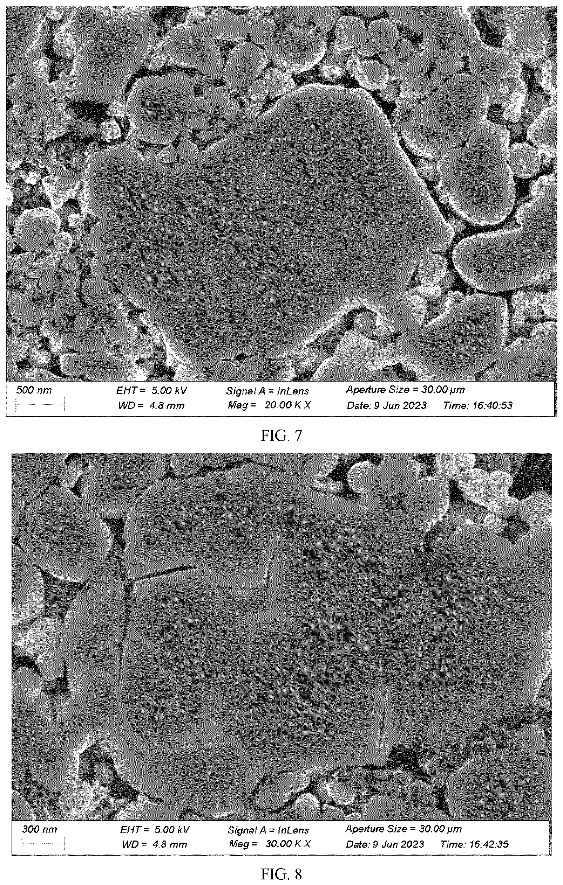

In summary, the medium-level crack is a crack 113 on the shell 112 of the positive electrode material 100 provided in embodiments of the disclosure. A scanning electron microscope spectrum illustrating the positive electrode material 100 with low-level cracks is illustrated in FIG. 6, a scanning electron microscope spectrum illustrating the positive electrode material 100 with medium-level cracks is illustrated in FIG. 7, and a scanning electron microscope spectrum illustrating the positive electrode material 100 with high-level cracks is illustrated in FIG. 8.

Values of performance parameters of the batteries 300 in embodiments 1 to 16 and comparative embodiments 1 to 4 are illustrated in Table 3.

**Table 3 performance parameters of batteries 300 in embodiments 1 to 16 and comparative embodiments 1 to 4**

| Embodiment and comparative embodiment | Capacity at 0.1C (Ah) | Capacity retention rate at 2C (%) | Capacity retention rate in the 2000th time of cycling (%) | Energy efficiency in the 2000th time of cycling (%) | Level of crack after 2000 times of cycling |
|---|---|---|---|---|---|
| Embodiment 1 | 3.13 | 94.1 | 92.1 | 94.8 | Medium |
| Embodiment 2 | 3.01 | 91.8 | 89.9 | 93.1 | Low |
| Embodiment 3 | 3.06 | 92.4 | 90.2 | 93.5 | Low |
| Embodiment 4 | 3.02 | 91 | 89.2 | 92.1 | High |
| Embodiment 5 | 3.06 | 91.1 | 87.2 | 91.6 | Low |
| Embodiment 6 | 3.07 | 92 | 88.3 | 92.1 | Low |
| Embodiment 7 | 3.11 | 93.7 | 91.7 | 94.5 | Medium |
| Embodiment 8 | 3.08 | 91.3 | 87.9 | 91.8 | Low |
| Embodiment 9 | 3.06 | 91.7 | 89.2 | 92.6 | Low |
| Embodiment 10 | 3.09 | 93.1 | 91.5 | 94.3 | Medium |
| Embodiment 11 | 3.13 | 94 | 92.3 | 94.4 | Medium |
| Embodiment 12 | 3.02 | 91.9 | 89.5 | 92.7 | Low |
| Embodiment 13 | 3.08 | 93.8 | 91.4 | 93.8 | Medium |
| Embodiment 14 | 3.09 | 94 | 92 | 94.5 | Medium |
| Embodiment 15 | 3.1 | 93.8 | 91.8 | 94.2 | Medium |
| Embodiment 16 | 3.09 | 93.6 | 91.7 | 94.4 | Medium |
| Comparative embodiment 1 | 2.96 | 89.6 | 85.8 | 91.1 | No |
| Comparative embodiment 2 | 2.98 | 90.2 | 86.8 | 90.9 | No |
| Comparative embodiment 3 | 3 | 90.4 | 87.1 | 91.3 | High |
| Comparative embodiment 4 | 2.94 | 89.1 | 85.3 | 89.8 | No |

As can be seen from data in Table 1 and Table 3, each of positive electrode materials 100 in embodiments 1 to 13 and comparative embodiments 1 to 3 includes only first particles 110, and each of the first particles 110 includes a core 111 and a shell 112. As can be seen from structural parameters of each of positive electrode materials 100 in embodiments 1 to 4 and comparative embodiments 1 to 3, a type of the doping element of each of the positive electrode materials 100 in embodiments 1 to 4 and comparative embodiments 2 and 3 is V, and a value of a mass fraction w of each of the doping elements in embodiments 1 to 4 satisfies: 0.05% ≤ *w* ≤ 0.5%, whereas the value of the mass fraction w of the doping element in comparative embodiment 2 is less than 0.05%, and the value of the mass fraction w of the doping element in comparative embodiment 3 is greater than 0.5%. The capacity retention rate at 2C, the capacity retention rate in the 2000th time of cycling, and energy efficiency in the 2000th time of cycling of each of batteries 300 in embodiments 1 to 4 are higher than the capacity retention rate at 2C, the capacity retention rate in the 2000th time of cycling, and energy efficiency in the 2000th time of cycling of each of batteries 300 in comparative embodiments 1 and 2. This is because, in each of the shells 112 in embodiments 1 to 4, the mass fraction w of the doping element is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. The value of the mass fraction w of the doping element of the positive electrode material 100 in comparative embodiment 3 is greater than 0.5%, and thus mass of other elements in the shell 112 accounts for a relatively small amount. However, since the doping element is an inactive element and incapable of storing lithium ions, the amount of active substances in the shell 112 is decreased, which is unconducive to improving the capacity utilization rate of the positive electrode sheet 200 when the positive electrode material 100 is applied to the positive electrode sheet 200. The value of the mass fraction w of the doping element of the positive electrode material 100 in comparative embodiment 2 is less than 0.05%, and thus the value of the mass fraction w of the doping element in the shell 112 is too small. In this case, a lattice difference between the LFP of the shell 112 and the LFP of the core 111 is relatively small, and an internal stress difference in the first particle 110 is relatively small, which is unconducive to generating the cracks 113. When the positive electrode material 100 is applied to the positive electrode sheet 200 and the positive electrode sheet 200 is assembled in the battery 300, it is difficult for the active ions in the electrolyte 330 to infiltrate the first particles 110 through the cracks 113 of the shell 112, and thus the migration speed of the active ions in the positive electrode sheet 200 is reduced. Therefore, the capacity utilization rate of the positive electrode material 100 is reduced, and the capacity utilization performance, energy efficiency, and rate performance of the battery 300 is reduced. In the positive electrode material 100 in comparative embodiment 1, V element is not doped, so that the first particle 110 does not generate internal stress and does not have cracks 113, which is unconducive to improving the capacity utilization performance, energy efficiency, and rate performance of the battery 300 when the first particles 110 are applied to the positive electrode sheet 200 and the positive electrode sheet 200 is assembled in the battery 300.

As can be seen from data in embodiments 5 to 7, the doping element of each of positive electrode materials 100 in embodiments 5 to 7 is Mn, and the value of the mass fraction w of each of the doping elements in embodiments 5 to 7 satisfies: 0.05% ≤ *w* ≤ 0.5%, and thus each of the batteries 300 in embodiments 5 to 7 has a relatively high capacity retention rate at 2C, capacity retention rate in the 2000th time of cycling, and energy efficiency in the 2000th time of cycling. This is because, in each of the shells 112 in embodiments 5 to 7, the mass fraction w of the doping element is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. In addition, in the battery 300 in embodiment 7, the cracks 113 are medium-level cracks, and accordingly, the battery 300 in embodiment 7 has the highest capacity utilization performance, energy efficiency, and rate performance. This is because, when the number of the cracks 113 and the maximum width of each of the cracks 113 of the battery 300 are in a reasonable range, the active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, and increase the capacity utilization rate of the positive electrode material 100.

As can be seen from data in embodiments 8 to 10, the doping element of each of the positive electrode materials 100 in embodiments 8 to 10 is W, and the value of the mass fraction w of each of the doping elements in embodiments 8 to 10 satisfies: 0.05% ≤ *w* ≤ 0.5%, and thus each of the batteries 300 in embodiments 8 to 10 has a relatively high capacity retention rate at 2C, capacity retention rate in the 2000th time of cycling, and energy efficiency in the 2000th time of cycling. This is because, in each of the shells 112 in embodiments 8 to 10, the mass fraction w of the doping element is in a reasonable range. Therefore, it is conducive to forming a relatively large lattice difference between the LFP of the shell 112 and the LFP of the core 111, so that a difference between the core 111 and the shell 112 in a lithium ion concentration and a difference between the core 111 and the shell 112 in a lattice change intensity of LFP cause the first particle 110 to have a relatively large internal stress difference, which is conducive to generating the cracks 113. When the positive electrode material 100 is applied to the positive electrode sheet 200 and the positive electrode sheet 200 is assembled in the battery 300, active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, increase the capacity utilization rate of the positive electrode material 100, reduce the voltage polarization, fully utilize energy of the positive electrode material 100, and improve the capacity utilization performance, energy efficiency, and rate performance of the battery 300. In addition, in the battery 300 in embodiment 10, the cracks 113 are medium-level cracks, and accordingly, the battery 300 in embodiment 10 has the highest capacity utilization performance, energy efficiency, and rate performance. This is because, when the number of the cracks 113 and the maximum width of each of the cracks 113 of the battery 300 are in a reasonable range, the active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, and increase the capacity utilization rate of the positive electrode material 100.

As can be seen from data in embodiment 3 and embodiments 11 to 13, the doping element of each of the positive electrode materials 100 in embodiment 3 and embodiments 11 to 13 is V, and the value of the particle size *D50* of each of the positive electrode materials 100 in embodiments 11 to 13 is greater than the value of the particle size *D50* of the positive electrode material 100 in embodiment 3. Furthermore, the cracks 113 are medium-level cracks when the value of the mass fraction w of the doping element is 0.20%, so that each of the batteries 300 in embodiments 11 to 13 has a relatively high capacity utilization performance, energy efficiency, and rate performance. This is because, when the positive electrode material 100 is applied to the positive electrode sheet 200 and the positive electrode sheet 200 is assembled in the battery 300, as the particle size *D50* of the positive electrode material 100 gradually increases, the compaction density of the positive electrode sheet 200 increases, and the energy density of the battery 300 increases. Furthermore, when the value of the mass fraction w of the doping element is in a reasonable range, the active ions in the electrolyte 330 may fully infiltrate the first particles 110 through the cracks 113 of the shell 112, so as to increase the migration speed of the active ions in the positive electrode sheet 200, make full use of capacities of the active substances of the first particles 110, and increase the capacity utilization rate of the positive electrode material 100.

Referring to Table 2 and Table 3, as can be seen from data in embodiments 14 to 16 and comparative embodiment 4, each of the positive electrode materials 100 in embodiments 14 to 16 includes first particles 110, second particles 120, and third particles 130. In each of the first particles 110, the type of the doping element is V, and the value of the mass fraction w of the doping element is 0.2%. For each of the positive electrode sheets 200 in embodiments 14 to 16, the compaction density *p* satisfies: 2.4 g/cm³ ≤ *ρ* ≤ 2.7 g/cm³ and is in a reasonable range. In addition, compared with the solution in which the positive electrode material 100 only has the first particles 110, addition of the second particles 120 and the third particles 130 in the positive electrode material 100 is conducive to increasing the compaction density of the positive electrode sheet 200. The positive electrode materials 100 in embodiments 14 to 16 all have cracks 113, and the cracks 113 are all medium-level cracks, so that the batteries 300 in embodiments 14 to 16 all have a relatively high capacity utilization performance, energy efficiency, and rate performance. Accordingly, referring to the positive electrode material 100 in comparative embodiment 4, although the compaction density of the positive electrode sheet 200 in comparative embodiment 4 satisfies: 2.4 g/cm³ ≤ *p* ≤ 2.7 g/cm³, the first particle 110 of the positive electrode material 100 in comparative embodiment 4 does not include any doping element, which makes it difficult to form a strong internal stress in both the shell 112 and the core 111 of the first particle 110, and thus it is difficult to generate the cracks 113. Accordingly, the capacity utilization performance, energy efficiency, and rate performance of the battery 300 in comparative embodiment 4 are relatively poor.

The term "implementation" or "embodiment" referred to herein means that a particular feature, structure, or feature described in conjunction with the embodiment or embodiment may be contained in at least one embodiment of the disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. The invention remains defined by the appended claims.

## Claims

1. A positive electrode material (100), comprising a plurality of first particles (110), wherein each of the plurality of first particles (110) comprises a core (111) and a shell (112), the shell (112) is wrapped around a periphery of the core (111), the core (111) comprises lithium iron phosphate, the shell (112) comprises lithium iron phosphate and a doping element, the doping element is a transition metal element, and a mass fraction of the transition metal element in the shell (112) gradually increases in a direction from the core (111) towards the shell (112);
wherein
the doping element is doped at an iron site,
**characterized in that**:
an equivalent spherical radius of the first particle (110) is *R,* a thickness of the shell (112) is *d,* and *d*/*R* satisfies: 0.3 ≤ *d*/*R* ≤ 0.8;
and
a mass fraction w of the doping element in the shell (112) satisfies: 0.05%≤*w*≤0.5%

2. The positive electrode material (100) of claim 1, wherein a chemical formula of the shell (112) is LiFe₁₋ₓMxPO₄, wherein M represents the doping element, M is selected from a group consisting of vanadium (V), manganese (Mn), cobalt (Co), nickel (Ni), stannum (Sn), magnesium (Mg), tungsten (W), chromium (Cr), and titanium (Ti), and combinations thereof, and x satisfies: 0<x<0.2.

3. The positive electrode material (100) of claim 1 or 2, wherein the positive electrode material (100) further comprises a plurality of second particles (120) and a plurality of third particles (130), wherein both the plurality of second particles (120) and the plurality of third particles (130) are dispersed in the plurality of first particles (110), a particle size of the first particle (110) is larger than a particle size of each of the plurality of second particle (120), and the particle size of the second particle (120) is larger than a particle size of each of the plurality of third particles (130).

4. The positive electrode material (100) of any of claim 3, wherein a particle size *D1* of the first particle (110) satisfies: 1.5 µm ≤ *D1* ≤ 10 µm, a particle size *D2* of the second particle (120) satisfies: 800 nm ≤ *D2* ≤ 1500 nm, and a particle size *D3* of the third particle (130) satisfies: 50 nm ≤ *D3* ≤ 800 nm.

5. The positive electrode material (100) of claim 3 or 4, wherein in the positive electrode material (100), a number content *A1* of the plurality of first particles (110) satisfies: 1%≤*A1*≤15%, a number content *A2* of the plurality of second particles (120) satisfies: 10%≤*A2*≤30%, and a number content *A3* of the plurality of third particles (130) satisfies: 60%≤*A3*≤85%.

6. A positive electrode sheet (200), comprising:
a positive-current-collector layer (210); and
a positive-electrode-material layer (200) disposed on a surface of the positive-current-collector layer (210), wherein the positive-electrode-material layer (200) comprises the positive electrode material (100) of any one of claims 1 to 5.

7. A battery (300), comprising:
the positive electrode sheet (200) of claim 6;
a separator (310) disposed at one side of the positive electrode sheet (200);
a negative electrode sheet (320) disposed at one side of the separator (310) away from the positive electrode sheet (200); and
an electrolyte (330), wherein at least part of the positive electrode sheet (200) and at least part of the negative electrode sheet (320) are infiltrated in the electrolyte.

## Patentansprüche

1. . Positives Elektrodenmaterial (100), das eine Vielzahl von ersten Partikeln (110) umfasst, wobei jedes der Vielzahl von ersten Partikeln (110) einen Kern (111) und eine Schale (112) umfasst, die Schale (112) den Umfang des Kerns (111) umgibt, der Kern (111) Lithiumeisenphosphat umfasst, die Schale (112) Lithiumeisenphosphat und ein Dotierungselement umfasst, das Dotierungselement ein Übergangsmetallelement ist, und der Massenanteil des Übergangsmetallelements in der Schale (112) in Richtung von dem Kern (111) zu der Schale (112) hin allmählich zunimmt;
wobei das Dotierungselement an einer Eisenstelle dotiert ist,
**dadurch gekennzeichnet, dass**:
ein äquivalenter Kugelradius des ersten Partikels (110) *R* beträgt, eine Dicke der Schale (112) *d* beträgt, und *d*/*R* Folgendes erfüllt: 0,3 ≤ *d*/*R* ≤ 0,8;
und ein Massenanteil *w* des Dotierungselements in der Schale (112) Folgendes erfüllt: 0,05 % ≤ *w* ≤ 0,5 %.

2. . Positives Elektrodenmaterial (100) nach Anspruch 1, wobei eine chemische Formel der Schale (112) LiFe₁₋ₓMₓPO₄ ist, wobei M das Dotierungselement darstellt, M aus einer Gruppe ausgewählt ist, die Vanadium (V), Mangan (Mn), Kobalt (Co), Nickel (Ni), Zinn (Sn), Magnesium (Mg), Wolfram (W), Chrom (Cr) und Titan (Ti) sowie Kombinationen davon umfasst, und x Folgendes erfüllt: 0 < x < 0,2.

3. . Positives Elektrodenmaterial (100) nach Anspruch 1 oder 2, wobei das positive Elektrodenmaterial (100) ferner eine Vielzahl von zweiten Partikeln (120) und eine Vielzahl von dritten Partikeln (130) umfasst, wobei sowohl die Vielzahl von zweiten Partikeln (120) als auch die Vielzahl von dritten Partikeln (130) in der Vielzahl von ersten Partikeln (110) dispergiert sind, die Partikelgröße des ersten Partikels (110) größer ist als die Partikelgröße jedes der Vielzahl von zweiten Partikeln (120) und die Partikelgröße des zweiten Partikels (120) größer ist als die Partikelgröße jedes der Vielzahl von dritten Partikeln (130).

4. . Positives Elektrodenmaterial (100) nach einem der Ansprüche 3, wobei eine Partikelgröße *D1* des ersten Partikels (110) Folgendes erfüllt: 1,5 µm ≤ *D1* ≤ 10 µm, eine Partikelgröße *D2* des zweiten Partikels (120) Folgendes erfüllt: 800 nm ≤ *D2* ≤ 1500 nm, und eine Partikelgröße *D3* des dritten Partikels (130) Folgendes erfüllt: 50 nm ≤ *D3* ≤ 800 nm.

5. . Positives Elektrodenmaterial (100) nach Anspruch 3 oder 4, wobei im positiven Elektrodenmaterial (100) ein zahlenbasierter Anteil *A1* der Vielzahl von ersten Partikeln (110) Folgendes erfüllt: 1 % ≤ *A1* ≤ 15 %, ein zahlenbasierter Anteil *A2* der Vielzahl von zweiten Partikeln (120) Folgendes erfüllt: 10 % ≤ *A2* ≤ 30 %, und ein zahlenbasierter Anteil *A3* der Vielzahl von dritten Partikeln (130) Folgendes erfüllt: 60 % ≤ *A3* ≤ 85 %.

6. . Positives Elektrodenblatt (200), umfassend:
eine positive Stromabnehmerschicht (210); und
eine Schicht (200) aus positivem Elektrodenmaterial, die auf einer Oberfläche der positiven Stromabnehmerschicht (210) angeordnet ist, wobei die Schicht (200) aus positivem Elektrodenmaterial das positive Elektrodenmaterial (100) nach einem der Ansprüche 1 bis 5 umfasst.

7. . Batterie (300), umfassend:
das positive Elektrodenblatt (200) nach Anspruch 6;
einen Separator (310), der an einer Seite des positiven Elektrodenblatts (200) angeordnet ist;
ein negatives Elektrodenblatt (320), das an einer von dem positiven Elektrodenblatt (200) abgewandten Seite des Separators (310) angeordnet ist; und
einen Elektrolyten (330), wobei mindestens ein Teil des positiven Elektrodenblatts (200) und mindestens ein Teil des negativen Elektrodenblatts (320) mit dem Elektrolyten durchtränkt sind.

## Revendications

1. Matériau d'électrode positive (100), comportant une pluralité de premières particules (110), dans lequel chacune de la pluralité de premières particules (110) comporte un cœur (111) et une enveloppe (112), l'enveloppe (112) est enroulée autour d'une périphérie du cœur (111), le cœur (111) comporte du lithium-fer-phosphate, l'enveloppe (112) comporte du lithium-fer-phosphate et un élément dopant, l'élément dopant est un élément de métal de transition, et une fraction massique de l'élément de métal de transition dans l'enveloppe (112) augmente progressivement dans une direction allant du cœur (111) vers l'enveloppe (112) ;
dans lequel l'élément dopant est dopé au niveau d'un site ferreux,
**caractérisé en ce que** :
un rayon sphérique équivalent de la première particule (110) est *R*, une épaisseur de l'enveloppe (112) est *d*, et *d*/*R* satisfait : 0,3 ≤ *d*/*R* ≤ 0,8 ;
et une fraction massique *w* de l'élément dopant dans l'enveloppe (112) satisfait : 0,05 % ≤ *w* ≤ 0,5 %.

2. Matériau d'électrode positive (100) selon la revendication 1, dans lequel une formule chimique de l'enveloppe (112) est LiFe₁₋ₓMₓPO₄, dans lequel M représente l'élément dopant, M est choisi dans un groupe consistant en vanadium (V), manganèse (Mn), cobalt (Co), nickel (Ni), étain (Sn), magnésium (Mg), tungstène (W), chrome (Cr) et titane (Ti), et leurs combinaisons, et x satisfait : 0 < x < 0,2.

3. Matériau d'électrode positive (100) selon la revendication 1 ou 2, dans lequel le matériau d'électrode positive (100) comporte en outre une pluralité de deuxièmes particules (120) et une pluralité de troisièmes particules (130), dans lequel à la fois la pluralité de deuxièmes particules (120) et la pluralité de troisièmes particules (130) sont dispersées dans la pluralité de premières particules (110), une taille de particule de la première particule (110) est supérieure à une taille de particule de chacune de la pluralité de deuxièmes particules (120), et la taille de particule de la deuxième particule (120) est supérieure à une taille de particule de chacune de la pluralité de troisièmes particules (130).

4. Matériau d'électrode positive (100) selon l'une quelconque de la revendication 3, dans lequel une taille de particule *D1* de la première particule (110) satisfait : 1,5 µm ≤ *D1* ≤ 10 µm, une taille de particule *D2* de la deuxième particule (120) satisfait : 800 nm ≤ *D2* ≤ 1 500 nm, et une taille de particule *D3* de la troisième particule (130) satisfait : 50 nm ≤ *D3* ≤ 800 nm.

5. Matériau d'électrode positive (100) selon la revendication 3 ou 4, dans lequel dans le matériau d'électrode positive (100), une teneur en nombre *A1* de la pluralité de premières particules (110) satisfait : 1 % ≤ *A1* ≤ 15 %, une teneur en nombre *A2* de la pluralité de deuxièmes particules (120) satisfait : 10 % ≤ *A2* ≤ 30 %, et une teneur en nombre *A3* de la pluralité de troisièmes particules (130) satisfait : 60 % ≤ *A3* ≤ 85 %.

6. Feuille d'électrode positive (200), comportant :
une couche de collecteur de courant positif (210) ; et
une couche de matériau d'électrode positive (200) disposée sur une surface de la couche de collecteur de courant positif (210), dans laquelle la couche de matériau d'électrode positive (200) comporte le matériau d'électrode positive (100) selon l'une quelconque des revendications 1 à 5.

7. Batterie (300), comportant :
la feuille d'électrode positive (200) selon la revendication 6 ;
un séparateur (310) disposé sur un côté de la feuille d'électrode positive (200) ;
une feuille d'électrode négative (320) disposée sur un côté du séparateur (310) éloigné de la feuille d'électrode positive (200) ; et
un électrolyte (330), dans laquelle au moins une partie de la feuille d'électrode positive (200) et au moins une partie de la feuille d'électrode négative (320) sont infiltrées dans l'électrolyte.
